**Europäisches Patentamt**

**European Patent Office**

**Office européen des brevets**

(19)

(11) Numéro de publication : **0 341 109 B1**

# FASCICULE DE BREVET EUROPEEN

(12)

(45) Date de publication du fascicule du brevet :
**23.09.92 Bulletin 92/39**

(51) Int. Cl.$^5$ : **G01V 11/00**, G01V 3/28

(21) Numéro de dépôt : **89401069.3**

(22) Date de dépôt : **18.04.89**

(54) **Méthode pour évaluer la teneur des roches sédimentaires en matière organique à partir de données enregistrées dans des puits par des sondes de diagraphie.**

Le dossier contient des informations techniques présentées postérieurement au dépôt de la demande et ne figurant pas dans le présent fascicule.

(30) Priorité : **28.04.88 FR 8805846**

(43) Date de publication de la demande : **08.11.89 Bulletin 89/45**

(45) Mention de la délivrance du brevet : **23.09.92 Bulletin 92/39**

(84) Etats contractants désignés :
**BE DE GB IT NL**

(56) Documents cités :
EP-A- 0 141 510
US-A- 3 180 141
US-A- 3 820 390

(56) Documents cités :
**US-A- 4 548 071**
**OIL & GAS JOURNAL, vol. 77, no. 3, 15 janvier 1979, pages 114-118, Tulsa, Okla., US; W.H. FERTL:** " **Hingle crossplotspeeds long-interval evaluation**"
"**Encyclopedia of Well Logging**", R. Desbrandes, **Institut Français du Pétrole Publications, Publ. 1985**

(73) Titulaire : **INSTITUT FRANCAIS DU PETROLE**
**4, Avenue de Bois Préau**
**F-92502 Rueil-Malmaison (FR)**

(72) Inventeur : **Carpentier, Bernard**
**27, rue du Grand Biard**
**F-95690 Labbeville (FR)**
Inventeur : **Huc, Alain-Yves**
**23, rue Laurin**
**F-92500 Rueil-Malmaison (FR)**
Inventeur : **Bessereau, Geneviève**
**Résidence Racine**
**F-91400 Orsay (FR)**

## Description

L'invention a pour objet une nouvelle méthode pour évaluer la teneur en matière organique des roches sédimentaires et principalement des roches-mères à partir des données enregistrées dans des puits ou forages par des sondes de diagraphie.

La méthode selon l'invention concerne plus particulièrement la détermination de la teneur en matière organique des roches-mères par une exploitation des données obtenues en réalisant au moins deux diagraphies de natures différentes telles que par exemple une diagraphie sonique et une diagraphie de résistivité. Dans le premier cas, on le rappelle, on descend dans un forage une sonde pourvue de transducteurs émetteurs et récepteurs d'ondes acoustiques et l'on mesure la vitesse de propagation de ces ondes dans les formations traversées par le forage et au voisinage de celui-ci. Dans le second cas, c'est la résistivité électrique des terrains avoisinant le puits qui est mesurée.

L'estimation de la teneur en matière organique des roches-mères constitue un élément important dans l'évaluation pétrolière d'un bassin sédimentaire.

Les méthodes habituellement utilisées pour estimer la teneur des roches sédimentaires en matière organique relèvent de la géochimie organique. Elles consistent essentiellement à quantifier et caractériser la matière organique contenue dans des échantillons prélevés dans des déblais de forage ou bien éventuellement dans des carottes géologiques, quand elles sont disponibles. les données géochimiques obtenues sont généralement peu nombreuses et parcellaires en raison du manque d'échantillons disponibles. La teneur en matière organique des formations géologiques n'est donc connue le plus souvent qu'en un nombre restreint de profondeurs et son évaluation est liée à la représentativité des déblais retirés des puits. On sait notamment que chaque échantillon prélevé dans des déblais est souvent représentatif d'une certaine épaisseur de terrain (de l'ordre de plusieurs mètres) et dans des formations présentant des variations rapides de faciès, il ne rend pas compte assez finement de leur hétérogénéité. Il est connu aussi que certains échantillons ne sont pas très significatifs dans la mesure où ils ont été prélevés dans certaines zones qui ont été mélangées avec des retombées provenant de couches supérieures. On sait aussi en outre que la présence de certains produits tels que du gazole ou du fuel qui peuvent se trouver dans la boue de forage, fausse complètement les mesures effectuées au laboratoire.

Il faut noter aussi que des correctifs doivent être apportés aux profondeurs de prélèvement des échantillons mesurées par les foreurs pour les données résultant des analyses géochimiques puissent être utilement comparées à celles obtenues par diagraphie et ceci nécessite des recalages de profondeurs.

L'évaluation des valeurs de la teneur organique tout au long d'un puits est donc généralement longue et très délicate.

Des recherches ont déjà été entreprises pour tenter de relier la teneur en matière organique à des mesures faites par des sondes de diagraphie de types très divers. Elles ont montré que les mesures étaient bien influencées par les différents composants de la roche et notamment par sa teneur en matière organique. Mais jusqu'à maintenant, on n'a que rarement réussi à dégager l'influence spécifique sur les mesures diagraphiques de la teneur en matière organique, avec une précision suffisante pour en faire une évaluation correcte et représentative.

Les méthodes déjà utilisées présentent un caractère empirique et se révèlent applicables uniquement dans des cas d'espèce.

Par le brevet US 3 820 390 (FORGOTSON), on connaît une méthode pour évaluer la teneur en hydrocarbures de roches-réservoir à partir des diagraphies relevées par deux sondes principales. La première mesure le temps de transit du son dans les roches et renseigne sur la porosité des roches, la deuxième, à leur résistivité électrique indicative de leur teneur en eau. Connaissant par exploitation des mesures la porosité et leur teneur en eau, la méthode décrite permet d'évaluer la teneur des roches en substances insolubles dans l'eau et principalement des hydrocarbures. Si les roches contiennent de l'argile, on élimine la perturbation qu'elle apporte en combinant aux mesures précédentes, celles fournies par une sonde de type gamma.

Par ce document et aussi notamment par "Encyclopedia of Well Logging, R. Desbrandes, Institut Français du Petrole Publications, 1985", on connaît une technique de résolution par pointés comparatifs ou "cross plot" avec constitution de réseaux de lignes d'iso-teneur pour certains paramètres.

La méthode selon l'invention, est définie par la revendication principale et selon ses modalités particulières par les revendications dépendantes 2 à 9. Elle permet d'évaluer la teneur des roches en matière organique à partir des mesures faites par deux sondes de diagraphie choisies suivant des critères particuliers définis aux points a), b), c) de la revendication principale. Avec cette sélection particulière de sondes, on peut se ramener à un système de représentation graphique à trois pôles seulement, du fait de l'identité au moins partielle de courbes d'iso-teneur, comme on va l'expliquer dans le cours de la description qui va suivre et par une application particulière de la technique de pointés comparatifs, déterminer le taux de matière organique contenue dans les roches sédimentaires.

Comparée aux méthodes antérieures, la méthode selon l'invention présente des avantages majeurs :

    – Elle permet d'obtenir de façon systématique une évaluation de la teneur de formations quelconques en matière organique d'après des mesures diagraphiques effectuées à espacement régulier tout le long d'un puits ou d'une portion de puits. Les difficultés liées dans les méthodes géochimiques antérieures au caractère discontinu et parcellaire des données recueillies, et à leur représentativité, sont ici évitées.

– Elle est applicable à un stade précoce de l'exploration, dès la phase d'enregistrement des diagraphies et dans tous les puits où l'on dispose d'enregistrements relevés par deux sondes parmi les plus couramment employées telles que les sondes de mesure de la résistivité, du temps de transit du son, de la densité etc.

– La richesse d'information qu'elle procure sur les teneurs en matière organique est bien supérieure à celle qui est obtenue en laboratoire par l'analyse d'un nombre très restreint d'échantillons.

– L'estimation de la teneur en matière organique telle que le montrent les enregistrements obtenus par la méthode selon l'invention, permet une sélection des niveaux lithologiques qui feront l'objet d'études géochimiques plus fines.

La répartition de la matière organique tout le long de colonnes lithologiques, obtenue par la mise en oeuvre de la méthode selon l'invention, facilite le travail d'interprétation géologique. On peut aussi mieux étudier les évolutions latérales et verticales des teneurs en matière organique dans les roches-mères, définir les règles régissant la sédimentologie de la matière organique à l'échelle du bassin et aboutir à une évaluation pétrolière quantitative la plus fiable possible.

D'autres caractéristiques et avantages de la méthode selon l'invention apparaîtront à la lecture de la description qui suit, d'un mode de réalisation donnée à titre d'exemple non limitatif en se référant aux dessins annexés ou :

– la figure 1 représente un réseau de lignes d'iso-teneur en matière organique dans un diagramme à trois pôles;

– la figure 2 montre dans le même diagramme, un réseau de lignes d'iso-teneur en matière organique obtenu sans connaître la position précise d'un des pôles mais seulement la direction où il se trouve;

– la figure 3 montre le report sur ce même diagramme de l'ensemble des couples de valeurs des paramètres mesurées dans un puits par deux sondes de diagraphies;

– la figure 4 montre à titre d'exemple, un mode d'évaluation de la teneur volumétrique en matière organique d'une roche en fonction de la valeur d'un couple de paramètres mesurés dans un puits;

– la figure 5 montre un organigramme récapitulant l'ensemble des opérations à effectuer sur les enregistrements des données diagraphiques pour obtenir un enregistrement des teneurs le long d'un puits;

– les figures 6 et 6A montrent un même organigramme dédoublé des opérations à effectuer pour obtenir une valeur optimale d'un des paramètres caractéristique de la matière organique pure; et

– les figures 7 et 8 représentent deux exemples de graphes obtenus expérimentalement qui montrent la similitude des teneurs en matière organique obtenues par la méthode selon l'invention et par une méthode classique du type géochimique.

La méthode selon l'invention comporte l'exploitation de données enregistrées par des outils de diagraphie qui permettent d'isoler les effets propres à la matière organique et par là-même, d'estimer son pourcentage au sein des roches sédimentaires.

On considère qu'une roche est un assemblage de différents composants : la matière organique (MO) y compris l'huile et le gaz, les argiles au sens de phyllo-silicates avec leur eau de constitution et celle qu'elles retiennent par porosité, l'eau non comprise dans les argiles et l'ensemble des minéraux, argiles exclues, que l'on désignera par matrice (matrix) dans la suite du texte.

La méthode selon l'invention comporte tout d'abord la sélection de deux outils de diagraphie convenant pour évaluer la matière organique.

On sait que la réponse des outils de diagraphie est liée aux caractéristiques propres des composants ainsi qu'à leur pourcentage respectif dans le volume de roche étudié. L'outil mesurant le temps de transit du son dans les formations est sensible aux teneurs en eau, en matière organique et en argile et beaucoup moins aux variations de composition de la matrice. L'outil mesurant la densité est sensible à l'eau et à la matière organique mais peu à l'argile. Une sonde à neutrons mesurant le nombre d'atomes d'hydrogène dans les formations, est sensible à leur teneur en eau, en matière organique ou en argile. L'outil mesurant la résistivité électrique des roches fera peu de différence entre l'argile et l'eau si elle est conductrice, et aucune pour des variations de composition de la matrice si les minéraux conducteurs ne sont pas en phase continue dans celle-ci. Il s'avère qu'une sonde à rayons gamma ne fournit pas de réponse liée directement aux paramètre physiques de la matière organique.

Quand on cherche à évaluer le pourcentage volumétrique de matière organique à partir des données fournies par une sonde de mesure du temps de transit $\Delta T$ ou de la densité ou bien par une sonde à neutrons, si l'on fait abstraction de la matrice et de l'argile, les effets produits par une variation de la porosité ou plus exactement de la teneur en eau et une variation de la teneur en matière organique sont équivalents du fait que les caractéristiques physiques de l'eau et de la matière organique sont proches. Pour ces trois sondes, l'eau et la matière organique sont pratiquement indiscernables. Aucune des trois, prises isolément, ne permet de calculer leurs proportions respectives.

On constate aussi que l'outil mesurant la résistivité ne sait pas faire la différence entre des variations de résistivité liées à des variations dans les proportions de matière organique et de matrice contenues dans les roches car ce paramètre est très élevé aussi bien pour l'une que pour l'autre.

Dans la pratique deux sondes de diagraphie différentes sont nécessaires pour évaluer le pourcentage volumétrique de matière organique. On choisit donc un outil dont les signaux de mesure évoluent en sens contraire les uns des autres en réponse à une variation de la teneur des roches en matière organique d'une part et en eau et en argile d'autre part et un autre outil dont les réponses à une variation de la teneur des roches en eau, en argile et en matière organique varient dans le même sens.

Comme premier outil, on peut choisir par exemple une sonde mesurant la résistivité des terrains traversés.

L'autre série de mesures nécessaires peut être obtenue par exemple au moyen d'un outil mesurant le temps de transit $\Delta T$ du son dans la roche ou la densité ou bien la teneur en atomes d'hydrogène qui tous les trois réagissent dans le même sens pour l'eau, l'argile et la matière organique.

Les deux outils de diagraphie sont choisis aussi de manière qu'une partie au moins des ensembles de couples de valeurs des paramètres mesurés (en l'occurrence la résistivité d'une part et le temps de transit $\Delta T$, la densité ou la teneur en atomes d'hydrogène d'autre part) qui correspondent à une même teneur en matière organique pour des roches sédimentaires comportant une proportion déterminée d'argile ou d'eau, soient sensiblement identiques.

Cette sélection d'outils permet de simplifier considérablement les opérations d'évaluation de la teneur en matière organique. Dans un diagramme de variations en fonction des deux paramètres choisis, les ensembles de couples de valeurs des paramètres déjà mentionnés se répartissent sur des courbes d'iso-teneur en matière organique. Sur le diagramme, on peut positionner quatre pôles purs qui correspondent aux quatre couples de valeurs prises par les paramètres si la roche-mère contient 100 % soit de matière organique, soit d'eau, soit de matrice ou soit encore d'argile. Si les réponses des sondes de diagraphie varient en fonction du pourcentage volumétrique de ces quatre composants, à une roche quelconque qui en contient en proportion quelconque, on peut associer un point dans l'espace délimité par des courbes joignant les quatre pôles. Mai si l'on ne dispose que de deux outils de mesure différentes, on doit se ramener à un système de représentation à trois pôles pour que les pourcentages respectifs des différents constituants puissent être évaluer graphiquement ou calculés.

Ceci est possible, comme on l'a établi, en vérifiant expérimentalement que les courbes d'iso-teneur qui réunissent le pôle matrice au pôle eau d'une part et au pôle argile d'autre part, sont sensiblement confondues sur une partie au moins de leur longueur et donc qu'elles sont sensiblement à la même place, dans le cas de l'eau et de l'argile, dans un contexte géologique très fréquent où l'eau de formation est relativement salée et la porosité des formations souterraines (non comprise celle de l'argile) est faible. La concordance des lignes d'iso-teneur s'observe notamment lorsque l'on utilise le diagramme résistivité $R_t$, temps de transit $\Delta T$ pour situer les points représentatifs des teneurs en matière organique.

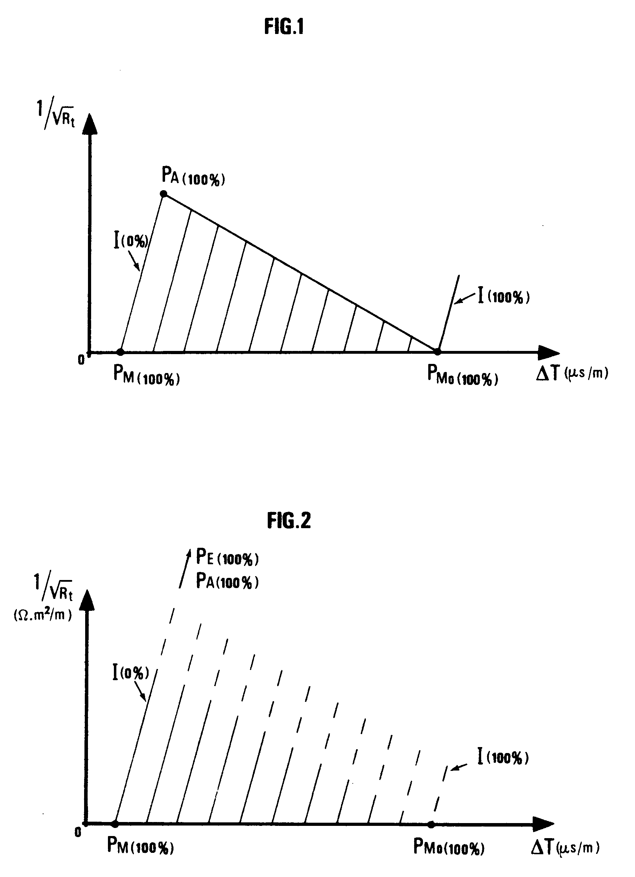

On peut considérer que l'argilosité d'une roche varie linéairement en fonction de $\Delta T$ et aussi de $1/\sqrt{R_t}$ et donc que dans un système de coordonnées $(\Delta T, 1/\sqrt{R_t})$ les courbes d'iso-teneur volumétrique en matière organique sont des droites parallèles (fig. 1) à celles qui relient le pôle 100 % de matrice $P_M$ au point 100 % d'argile $P_A$. La résistivité de la matrice ou de la matière organique pouvant être considérée comme infinie, le pôle matrice et le pôle matière organique sont situés sur l'axe $\Delta T$ mais à des positions nettement différentes car le temps de transit $\Delta T$ de la matrice M (de l'ordre de 140 µs/mètres à 190 µs/mètre selon sa composition) est très inférieur à celui de la matière organique $\Delta T(MO)$. On estime que dans la plupart des cas, $\Delta T(MO)$ varie autour d'une valeur moyenne de 800 µs/mètre.

Un diagramme similaire peut être tracé en remplaçant le pôle argile $P_A$ par un pôle 100 % eau $P_E$ et de la même façon les droites d'iso-teneur en matière organique sont parallèles à celle qui joint celui-ci au pôle $P_M$ de matrice.

On vérifie expérimentalement que dans un tel diagramme, les droites d'iso-teneur en matière organique ont sensiblement la même pente que l'on considère le pôle eau $P_E$ ou le pôle argile $P_A$ (fig. 2) et donc que le pourcentage de matière organique contenu dans une roche peut être déterminé même si l'on ignore la position précise du pôle eau ou du pôle argile dès lors que l'on peut déterminer la droite sur laquelle ils se trouvent.

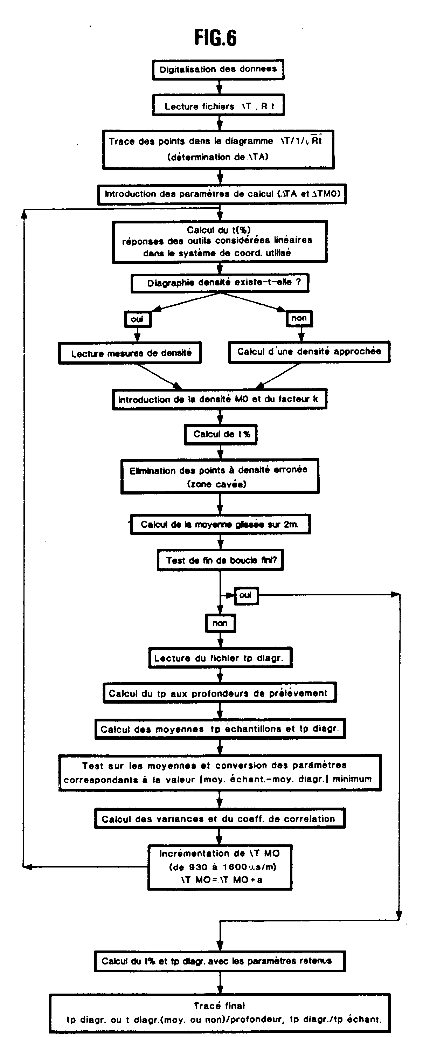

En conséquence, l'estimation de la teneur de la roche en matière organique ne nécessite que le positionnement de la ligne I(0 %) joignant le pôle matrice au pôle argile ou eau (et correspondant à une teneur nulle) et la sélection d'une valeur $\Delta T_{MO}$ sur l'axe $\Delta T$ qui correspond au temps de transit du son dans une roche qui ne contient que de la matière organique. Cette valeur $\Delta T_{MO}$ peut être choisie par les géologues qui la considèrent comme bien représentative du bassin sédimentaire où les études sont menées ou bien encore être calculée d'après les données diagraphiques obtenues comme on le verra plus loin en relation avec la figure 6.

L'ensemble de couples de valeurs des paramètres servant de référence -traduit par la ligne d'iso-teneur correspondant à une roche contenant un pourcentage déterminé organique- est obtenu expérimentalement à partir des valeurs des deux paramètres choisis mesurés tout le long de chaque puits ou portion de puits. Dans le diagramme ($\Delta T$, $1/\sqrt{R_t}$) cette ligne de référence est soit la droite I(0 %) (fig. 2) partant du pôle matrice $P_M$, soit une ligne I passant par au moins un point (associé à un couple de valeurs mesurées) auquel on sait attribuer une teneur particulière.

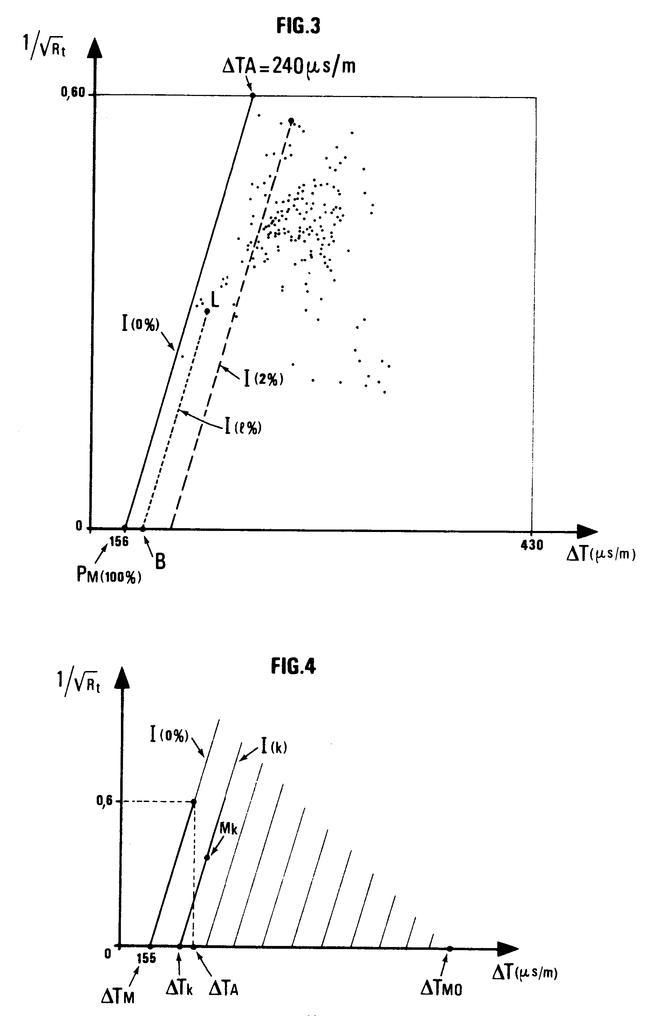

Pour déterminer cette ligne de référence dans le premier cas, on reporte sur le diagramme les valeurs des deux paramètres choisis mesurées en un grand nombre d'emplacements tout le long de chaque puits. Dans le diagramme en fonction de $\Delta T$ et $1/\sqrt{R_t}$ représenté à la figure 3, la ligne de référence I(0 %) est une droite de plus grande pente issue du pôle matrice et passant parmi tous les points représentatifs des couples de valeurs. On définit la pente de cette ligne par une valeur numérique $\Delta T_A$ associée à l'un de ses points, pour lequel la valeur de $1/\sqrt{R_t}$ est égale à 0,6 par exemple.

Ce mode de détermination de la ligne de référence à 0 % de matière organique implique que parmi les couches traversées par le puits, il s'en trouve qui sont dépourvues de matière organique. Il est possible si on a pu vérifier expérimentalement l'existence de telles couches par comparaison avec des résultats d'analyses géochimiques.

A défaut, si l'on sait attribuer une teneur déterminée en matière organique à au moins un point reporté sur le diagramme (correspondant à un couple de valeurs mesurées à une certaines profondeur d'un puits), on peut tracer la droite $I_l$ (fig. 3) passant par ce point et le point B (fig. 3) qui correspond à une roche ne contenant que la matrice et cette même teneur en matière organique. Ce dernier point B est situé sur l'axe $\Delta T$ mais distinct du pôle $P_M$(100 %). Le réseau d'ensembles de couples de valeurs est traduit par la famille de droites d'iso-teneur, depuis la droite I(0 %) à la droite I(100 %), parallèlement à la droite $I_l$.

Les expérimentations où l'on a pu comparer les résultats obtenus par la méthode selon l'invention avec des mesures géochimiques effectuées sur déblais, ont montré que l'erreur que l'on commettait dans le positionnement de la ligne de référence due aux erreurs de mesure éventuelles dans le positionnement des points, était négligeable si la distance verticale parcourue par les sondes diagraphiques utilisées était suffisamment grande.

On voit aussi sur le diagramme de la figure 3, que la ligne d'iso-teneur volumétrique I(2 %) correspondant à un pourcentage de 2 % de matière organique en volume est nettement distincte de la ligne I(0 %) si bien qu'une erreur éventuelle dans le positionnement de celle-ci reste compatible avec la précision recherchée.

La ligne de référence d'iso-teneur I(0 %) ou I(l %) ayant été positionnée sur le diagramme, on peut alors calculer la teneur volumétrique associée à chacun des points marqués sur la figure 3.

Dans le cas général, on détermine la position des différentes lignes d'un réseau de lignes d'iso-teneur à partir de la ligne de référence et la valeur choisie pour le coefficient $\Delta T(MO)$. Dans le cas pratique de représentation ($\Delta T$, $1/\sqrt{R_t}$) des figures 3, 4 où le réseau est un ensemble de droites parallèles à la droite de référence I(0 %), on trace la droite I(k) du réseau passant par tout point Mk déterminé par les mesures diagraphiques et l'on mesure la valeur $\Delta T_k$ associée. La teneur volumétrique qui lui correspond est obtenue alors en appliquant la relation :

$$t(\%) = \frac{\Delta T_k - \Delta T_M}{\Delta T_{MO} - \Delta T_M} \quad (1)$$

ou $\Delta T_M$ et $\Delta T_{MO}$ sont, on le rappelle, les temps de transit associés respectivement au pôle matrice et au pôle matière organique.

Le calcul ayant été effectué pour chacun des points ($M_k$) du diagramme, on peut donc réaliser un enregistrement des valeurs obtenues et une représentation graphique de la variation de la teneur volumétrique des roches en fonction de la profondeur.

De préférence, on transforme les teneurs volumétriques t(%) obtenues en teneurs pondérales tp en carbone organique en utilisant la relation :

$$tp = t(\%) \cdot \frac{D_{MO}}{d} \cdot \frac{1}{k} \quad (2)$$

où $D_{MO}$ représente la densité de la matière organique, d, la densité de la roche et k un facteur de proportionnalité entre le carbone organique et la matière organique. Par cette transformation, on facilite les comparaisons avec les résultats obtenus par les analyses géochimiques. On peut "lisser" les résultats précédents sur une profondeur de plusieurs mètres pour obtenir des résultats représentatifs d'une même épaisseur de formations que les analyses géochimiques.

La valeur d utilisée dans la relation (2) peut être soit une donnée obtenue au moyen d'une sonde de mesure de la densité, si on possède une telle diagraphie ou bien une valeur estimée d'après des données connues par ailleurs et notamment d'après des diagraphies de densité qui ont pu être effectuées dans d'autres puits.

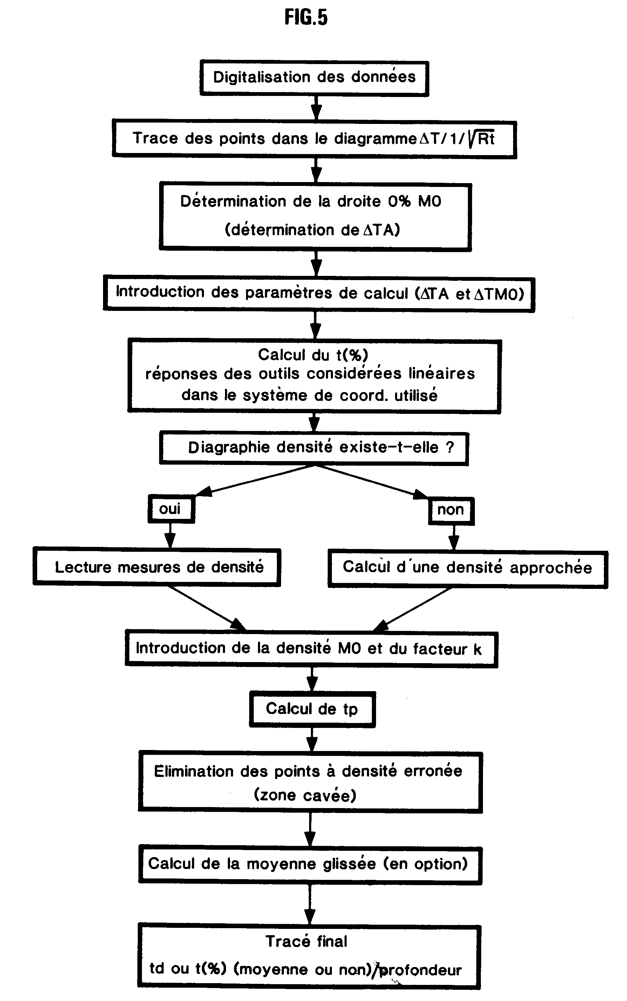

L'organigramme de traitement que l'on suit pour obtenir un enregistrement des variations de la teneur pondérale $t_d$ en fonction de la profondeur est représenté à la figure 5.

Dans le cas où l'on dispose aussi pour chaque puits étudié, de données mêmes partielles obtenues par analyse géochimique d'échantillons provenant du puits, on peut éventuellement réaliser une comparaison entre elles et les données de diagraphie de manière à obtenir plus précisément la position du pôle $P_{MO}$ sur l'axe $\Delta T$ (fig. 1, 2).

La valeur $\Delta T_A$ associée à la ligne de référence étant connue et l'intervalle de variation possible de $\Delta T_{MO}$ étant définie, on fait varier la valeur de ce dernier paramètre par incrément de valeur a jusqu'à ce que la valeur absolue de la différence entre la moyenne des valeurs de la teneur pondérale en matière organique des échantillons ($t_p$ échant.) et la moyenne des valeurs correspondantes obtenues d'après les mesures de diagraphie ($t_p$ DIAG) "lissées" sur un certain intervalle de profondeur (2 m par exemple), soit minimale.

L'organigramme de traitement que l'on peut suivre pour obtenir les valeurs optimales de $\Delta T_{MO}$ pour le puits étudié, est représenté à la figure 6.

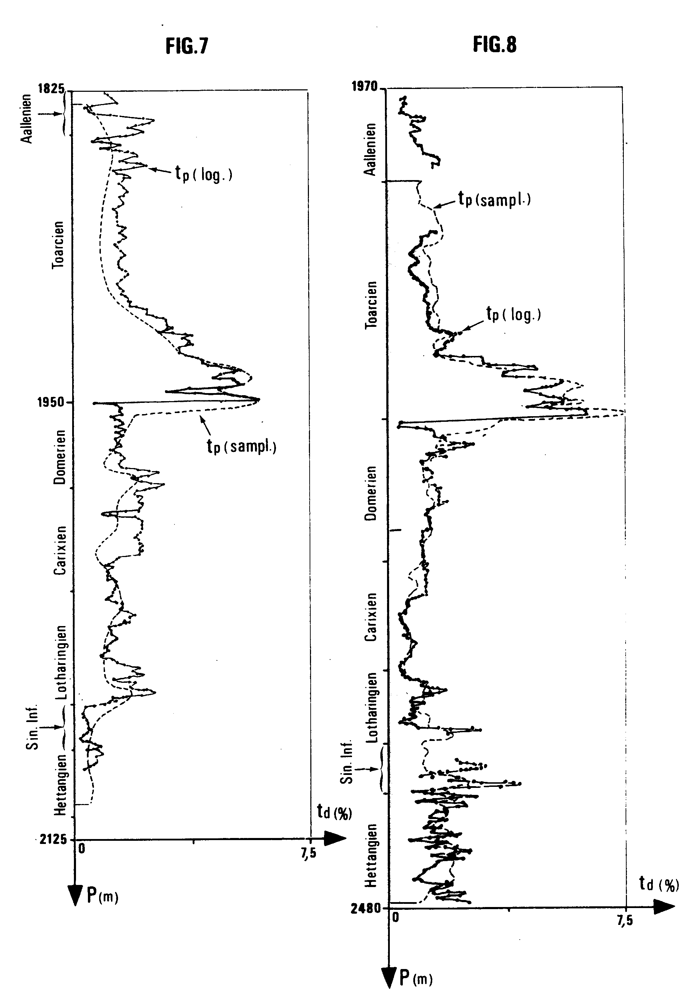

On a vérifié expérimentalement que les résultats obtenus par la méthode selon l'invention concordaient bien avec ceux où des échantillonnages très nombreux provenant de déblais avaient été effectués, comme le montre les exemples des figures 7 et 8. Sur ces figures, les zones grisées sont délimitées par la courbe tp(échant.) obtenue à partir d'échantillons de terrain analysés. L'autre graphe représente la variation de la teneur pondérale en carbone organique évaluée d'après les mesures diagraphiques (tp diag.).

La méthode selon l'invention a été décrite en faisant appel à une représentation graphique. On ne sortirait pas du cadre de l'invention toutefois en conduisant l'exploitation des données de diagraphie sans référence à une quelconque représentation, notamment en utilisant des moyens de traitement programmés pour rechercher l'ensemble des couples de valeurs qui sert de référence, pour déterminer tous les ensembles de couples de valeurs correspondant à des iso-teneurs en matière organique et pour déterminer à quel ensemble de couples peut être associé chacun des couples de mesures effectuées dans les puits étudiés. A cet effet on utilise les relations connues entre la résistivité d'une roche d'une part et les volumes et les résistivités de ses différents constituants d'autre part et aussi les relations entre le temps de transit du son dans une roche d'une part et les volumes et les temps de transit associés aussi à ses mêmes constituants.

**Revendications**

1. - Méthode pour évaluer la teneur en matière organique de roches sédimentaires en utilisant des données de diagraphie mesurées dans un puits au travers des formations d'un bassin sédimentaire, par au moins deux sondes de diagraphie mesurant deux paramètres différents, et en exploitant une technique de pointages comparatifs caractérisée en ce qu'elle comporte la sélection de deux sondes telles que

a) l'une des sondes produise des signaux de mesure évoluant dans le même sens en réponse à une variation de la teneur en eau, en argile et en matière organique (MO) dans lesdites roches sédimentaires,

b) l'autre sonde produit des signaux de mesure évoluant en sens contraire les uns des autres en réponse à une variation de la teneur en matière organique d'une part et de l'eau ou de l'argile d'autre part dans les mêmes roches sédimentaires, et

c) les deux sondes étant choisies en outre de manière qu'une partie au moins des ensembles (I) de couples de valeurs de paramètres mesurées correspondant à une teneur égale en matière organique, associés respectivement à des roches sédimentaires comportant une proportion déterminée d'argile ou d'eau, soient sensiblement identiques,

et en ce que l'on applique ladite technique de pointages comparatifs par

– une sélection d'au moins un couple de valeurs des paramètres caractéristiques de la matière organique pure (PMO);

– l'établissement d'un réseau d'ensembles (I) de couples de valeurs des paramètres mesurés, chacun des ensembles dudit réseau correspondant à une teneur égale en matière organique, en prenant pour référence un ensemble de couples de valeurs correspondant à des roches sédimentaires contenant une teneur en matière organique déterminée,

– la détermination successive de l'ensemble (I) de couples du réseau correspondant à une même teneur t(%), auquel appartient chacun des couples de valeurs des deux paramètres mesurés par les sondes choisies, en une pluralité de points de mesure à des profondeurs différentes d'un même puits, et

– la réalisation d'un enregistrement des valeurs des teneurs volumétriques $\Delta t(\%)$ en matière organique associées respectivement auxdits ensembles de couples, de manière à réaliser une représentation sensiblement continue de la teneur volumétrique en matière organique des formations traversées par le puits.

2. - Méthode selon la revendication 1, caractérisée en ce que l'on utilise les mesures effectuées par au moins deux sondes de puits adaptées à mesurer la résistivité électrique ($R_t$) des terrains traversés, le temps de transit ($\Delta T$) du son dans ces mêmes terrains, leur teneur en atomes d'hydrogène ou leur densité.

3. - Méthode selon la revendication 2, caractérisée en ce que l'on utilise les mesures effectuées par une sonde de puits mesurant la résistivité électrique des terrains et au moins une autre sonde de puits mesurant le temps de transit du son dans ces mêmes terrains, on choisit une diagramme de représentation graphique en fonction de la résistivité ($R_t$) et du temps de transit ($\Delta T$) où ledit réseau d'ensembles de couples de valeurs des paramètres mesurés, associé chacun à une même teneur, peut être assimilé à une famille de lignes d'iso-teneur sensiblement parallèles, la teneur en matière organique associée à chaque couple de valeurs de la résistivité et du temps de transit mesurées dans le puits étant alors déterminée en identifiant la ligne d'iso-teneur passant par le point représentatif dudit couple dans le diagramme de représentation choisi.

4. - Méthode selon la revendication 2, caractérisée en ce que l'on utilise les mesures effectuées par une sonde de puits mesurant la résistivité électrique ($R_t$) des terrains, et au moins une autre sonde de puits mesurant leur densité.

5. - Méthode selon la revendication 1, caractérisée en ce que l'on détermine en outre les teneurs pondérales en matière organique associées respectivement aux différentes valeurs des teneurs volumétriques obtenues.

6. - Méthode selon la revendication 1, caractérisée en ce que l'on détermine l'ensemble de référence en sélectionnant parmi tous les couples de valeurs mesurées dans le puits, au moins un couple de valeurs particuliers auquel on peut associer une teneur déterminée en matière organique.

7. - Méthode selon la revendication 1, caractérisée en ce que chaque couple de valeurs des paramètres mesurées dans le puits, est représenté dans un diagramme en fonction de coordonnées ($\Delta T$, $1/\sqrt{R_t}$), l'une mesurant le temps de transit $\Delta T$ du son dans la roche et l'autre l'inverse de la racine carrée de la résistivité $R_t$, où les ensembles de couples de valeurs correspondant à une teneur égale sont représentés par une famille de droites (I) parallèles à une droite de référence, à laquelle on peut assigner une teneur déterminée en matière organique, la position de celle-ci étant déterminée par au moins deux points représentatifs, l'un, étant associé à une roche qui ne contient que de la matrice et ladite teneur déterminée en matière organique, l'autre à une couple de valeurs mesurées dans le puits, auquel on peut associer cette même teneur en matière organique.

8. - Méthode selon la revendication 7, caractérisée en ce que l'on détermine la position des droites d'iso-teneur entre une droite correspondant à de la roche exempte de matière organique et un pôle ($P_{MO}$) correspondant aux valeurs prises par les deux paramètres dans le cas où la roche ne contient que de la matière organique.

9 - Méthode selon la revendication 1, caractérisée en ce que le couple de valeurs caractéristique de la matière organique pure est obtenu par comparaison avec des données obtenues par une analyse d'échantillons provenant de différents emplacements le long du puits.

**Patentansprüche**

1. Verfahren zum Bewerten des Gehalts an organischem Material von Sedimentgesteinen unter Verwendung der in einem Bohrloch quer durch Formationen eines sedimentären Beckens gemessenen Diagraphiedaten durch wenigstens zwei Diagraphiesonden, die zwei unterschiedliche Parameter messen und unter Ausnutzung einer Technik vergleichender Einzeichnungen,

dadurch gekennzeichnet, daß es die Wahl von zwei Sonden derart umfaßt, daß

a) eine der Sonden Meßsignale erzeugt, die sich in der gleichen Richtung abhängig von einer Veränderung des Gehalts an Wasser, Ton und organischem Material (MO) in diesen Sedimentgesteinen entwickeln,

b) die andere Sonde Meßsignale erzeugt, die sich in entgegengesetzter Richtung zueinander abhängig von einer Veränderung des Gehalts an organischem Material einerseits und von Wasser oder Ton andererseits in den gleichen Sedimentgesteinen entwickeln, und

c) die beiden Sonden, die im übrigen derart gewählt sind, daß wenigstens ein Teil der Gruppenpaare (I) von gemessenen Parameterwerten einem gleichen Gehalt an organischem Material entsprechen, jeweils zugeordnet zu sedimentären Gesteinen, mit einem bestimmten Anteil an Ton oder Wasser, im wesentlichen gleich sind,

und daß man diese Technik vergleichender Einzeichnungen anwendet durch

– eine Auswahl wenigstens eines Paares von charakteristischen Parameterwerten dieses reinen organischen Material (PMO);

– Aufstellen eines Netzes von Gruppen (I) von Wertepaaren der gemessenen Parameter, wobei jede der Gruppen dieses Netzes einem gleichen Gehalt an organischem Material entspricht, indem man als Bezug eine Anordnung von Wertepaaren entsprechend den Sedimentgesteinen nimmt, die einen bestimmten Gehalt an organischem Material enthalten;

– aufeinanderfolgende Bestimmung der Gruppe (I) von Paaren des Netzes entsprechend ein und dem gleichen Gehalt t(%), zu dem jedes der Wertepaare der beiden durch die gewählten Sonden gemessenen Parameter gehört, an einer Vielzahl von Meßpunkten auf unterschiedlichen Tiefen ein und des gleichen Bohrlochs, und
– Realisierung einer Aufzeichnung der Werte der volumetrischen Gehalte $\Delta t(\%)$ an organischem Material, die jeweils diesen Paargruppen derart zugeordnet sind, daß eine im wesentlichen kontinuierliche Darstellung des volumetrischen Gehalts an organischem Material der durch das Bohrloch durchsetzten Formationen realisiert wird.

2.  Verfahren nach Anspruch 1, dadurch gekennzeichnet, daß man die durch wenigstens zwei Bohrlochsonden durchgeführten Messungen nutzt, die ausgelegt sind zur Messung des spezifischen elektrischen Widerstands ($R_t$) der durchsetzten Böden, der Schalldurchgangszeit ($\Delta T$) in ebendiesen Böden, ihrem Gehalt an Wasserstoffatomen oder ihrer Dichte.

3.  Verfahren nach Anspruch 2, dadurch gekennzeichnet, daß man die durch eine Bohrlochsonde, die den spezifischen elektrischen Widerstand der Böden mißt, ausgeführten Messungen benutzt und wenigstens eine andere Bohrlochsonde, die die Schalldurchgangszeit in ebendiesen Böden mißt, daß man ein Diagramm der graphischen Darstellung als Funktion des spezifischen Widerstands ($R_t$) und der Durchgangszeit ($\Delta T$) wählt, wo dieses Netz von Gruppen von Wertepaaren der gemessenen Parameter, in Zuordnung zu ein und dem gleichen Gehalt, an eine Familie im wesentlichen paralleler Linien gleichen Gehalts angeglichen werden kann, wobei der Gehalt an organischem Material in Zuordnung zu jedem Paar der Werte des spezifischen Widerstands und der Durchgangszeit, gemessen im Bohrloch, dann bestimmt wird, indem man die Linie gleichen Gehalts, die durch den repräsentativen Punkt dieses Paares im gewählten Darstellungsdiagramm geht, identifiziert.

4.  Verfahren nach Anspruch 2, dadurch gekennzeichnet, daß man die durch eine Bohrlochsonde ausgeführten Messungen benutzt, welche den spezifischen elektrischen Widerstand ($R_t$) der Böden mißt, und wenigstens eine andere Bohrlochsonde deren Dichte mißt.

5.  Verfahren nach Anspruch 1, dadurch gekennzeichnet, daß man im übrigen die Gewichtsgehalte an organischem Material, jeweils in Zuordnung zu den verschiedenen Werten der erhaltenen volumetrischen Gehalte, mißt.

6.  Verfahren nach Anspruch 1, dadurch gekennzeichnet, daß man die Bezugsgruppe bestimmt, indem man aus allen im Bohrloch gemessenen Wertepaaren wenigstens ein Paar besonderer Werte wählt, dem man einen bestimmten Gehalt an organischem Material zuordnen kann.

7.  Verfahren nach Anspruch 1, dadurch gekennzeichnet, daß jedes Wertepaar der im Bohrloch gemessenen Parameter dargestellt wird in einem Diagramm als Funktion der Koordinaten ($\Delta T$, $1/\sqrt{R_t}$), wobei eine die Schalldurchgangszeit $\Delta T$ im Gestein und die andere die umgekehrte Quadratwurzel des spezifischen elektrischen Widerstands mißt, wobei die Gruppen von Wertepaaren, die einem gleichen Gehalt entsprechen, dargestellt sind durch eine Familie von Geraden (I), die zu einer Bezugsgeraden parallel sind, der man einen bestimmten Gehalt an organischem Material zuordnen kann, wobei die Position hiervon bestimmt wird durch wenigstens zwei repräsentative Punkte, von denen der eine einem Gestein zugeordnet ist, das nur die Matrix sowie den bestimmten Gehalt an organischem Material enthält, und der andere einem Paar von im Bohrloch gemessenen Werten entspricht, dem man diesen Wert an organischem Material zuordnen kann.

8.  Verfahren nach Anspruch 7, dadurch gekennzeichnet, daß man die Position der Geraden gleichen Gehalts zwischen einer Geraden entsprechend dem von organischem Material freien Gestein und einem Pol ($P_{MO}$) entsprechend den Werten bestimmt, die von den beiden Parametern für den Fall angenommen wurden, wo das Gestein nur das organische Material enthält.

9.  Verfahren nach Anspruch 1, dadurch gekennzeichnet, daß das charakteristische Wertepaar des reinen organischen Materials erhalten wird durch Vergleich mit Daten, die durch eine Analyse von Proben, die von unterschiedlichen Orten längs des Bohrlochs stammen, erhalten wird.

**Claims**

1.  Method for estimating the organic matter content of sedimentary rocks by using well logging data measured in a well through formations forming part of a sedimentary basin, using two well logging probes measuring two different parameters and a technique of comparative reference points, characterised in that it comprises the selection of two probes, such that :
    a. One of the probes produces measurement signals transmitted in the same direction in response to a variation in the water, clay and organic matter ( MO ) content in the said sedimentary rocks.

b. The other probe produces measurement signals transmitted in opposite directions to each other in response to a variation in the organic matter content, on the one hand, and the water or clay, on the other hand, in the same sedimentary rocks, and

c. The two probes are also chosen so that one part at least of the sets (I) of pairs of values of the parameters measured, corresponding to an equal organic matter content, associated respectively with sedimentary rocks comprising a given proportion of clay or water, are substantially identical.

and in that the said comparative reference points technique is applied by :

– selecting at least one pair of values of the characteristic parameters of the pure organic matter (PMO)

– establishing a network of sets (I) of pairs of values of the parameters measured, each set in the said network corresponding to an equal organic matter content, taking as a reference a set of pairs of values corresponding to those sedimentary rocks containing a given organic matter content

– successively determining the set (I) of pairs for the network corresponding to the same content t (%), to wich belong each of the pairs of values of the two parameters measured by the probes chosen, at a number of measurement points at different depths in the same well, and

– recording of the values of the volumetric contents Δt (%) of organic matter associated respectively with the said sets of pairs, in order to obtain a substantially continuous representation of the volumetric content of organic matter in the formations crossed by the well

2. Method in accordance with claim 1, characterised in that the measurements provided by at least two well probes are used, these being designed to measure the electrical resistivity ($R_t$) of the ground passed through, the transit time ($\Delta T$) for the sound through this same ground, its hydrogen atoms content or its density.

3. Method in accordance with claim 2, characterised in that the measurements provided by a well probe measuring the electrical resistivity of the ground are used and at least one other well probe measuring the transit time for the sound through this same ground, a representative graphic diagram being chosen in terms of the resistivity ($R_t$) and the transit time ($\Delta T$) where the said network comprising sets of pairs of values of the parameters measured, each being associated with the same content, may be compared with a family of substantially parallel iso-content lines, the organic matter content associated with each pair of values for the resistivity and the transit time measured in the well then being determined by identifying the iso-content line passing through the point representative of the said pair in the representative diagram chosen.

4. Method in accordance with claim 2, characterised in that the measurements provided by a well probe measuring the electrical resistivity ($R_t$) of the ground are used and at least one other well probe measuring its density.

5. Method in accordance with claim 1, characterised in that the weighted values of the organic matter contents are determined, as associated respectively with the different values for the volumetric contents obtained.

6. Method in accordance with claim 1, characterised in that the reference set is determined by selecting, from all the pairs of values measured in the well, at least one pair of particular values to which a given organic matter content may be associated.

7. Method in accordance with claim 1, characterised in that each pair of values of the parameters measured in the well is represented in a diagram, in terms of the co-ordinates ($\Delta T$, $1/\sqrt{R_t}$), one measuring the transit time $\Delta T$ of the sound through the rock and the other the inverse of the square root for the resistivity $R_t$, where the sets of pairs of values corresponding to an equal content are represented by a family of straight lines (I) parallel to a reference straight line, to which a given organic matter content may be assigned, the position of this latter being determined by at least two representative points, one being associated with a rock which contains only the matrix and the said given content of organic matter, the other with a pair of values measured in the well, with which this same organic matter content may be associated.

8. Method in accordance with claim 7, characterised in that the position of the iso-content straight lines is determined, between a straight line corresponding to the rock which is devoid of organic matter and a pole ($P_{MO}$) corresponding to the values given by the two parameters in the case where the rock contains only organic matter.

9. Method in accordance with claim 1, characterised in that the pair of values characteristic for the pure organic matter is obtained by comparison with data obtained by the analysis of samples originating from different positions along the well.

## FIG.1

## FIG.2

FIG.3

FIG.4

EP 0 341 109 B1

## FIG.5

Digitalisation des données

Trace des points dans le diagramme $\Delta T / 1 / \sqrt{Rt}$

Détermination de la droite 0% MO
(détermination de $\Delta TA$)

Introduction des paramètres de calcul ($\Delta TA$ et $\Delta TMO$)

Calcul du t(%)
réponses des outils considérées linéaires
dans le système de coord. utilisé

Diagraphie densité existe-t-elle ?

oui                non

Lecture mesures de densité        Calcul d'une densité approchée

Introduction de la densité MO et du facteur k

Calcul de tp

Elimination des points à densité erronée
(zone cavée)

Calcul de la moyenne glissée (en option)

Tracé final
td ou t(%) (moyenne ou non)/profondeur

13

# FIG.6

```
┌─────────────────────────────────┐
│   Digitalisation des données     │
└─────────────────────────────────┘
                 │
┌─────────────────────────────────┐
│   Lecture fichiers \T , R t       │
└─────────────────────────────────┘
                 │
┌─────────────────────────────────────────────┐
│ Trace des points dans le diagramme \T/1/√Rt  │
│         (détermination de \TA)                │
└─────────────────────────────────────────────┘
                 │
┌──────────────────────────────────────────────┐
│ Introduction des paramètres de calcul (\TA et \TMO) │
└──────────────────────────────────────────────┘
                 │
┌──────────────────────────────────────────────┐
│              Calcul du t(%)                    │
│  réponses des outils considérées linéaires     │
│    dans le système de coord. utilisé           │
└──────────────────────────────────────────────┘
                 │
┌──────────────────────────────────────────────┐
│      Diagraphie densité existe-t-elle ?        │
└──────────────────────────────────────────────┘
          oui                      non
           │                        │
┌──────────────────────┐  ┌──────────────────────────┐
│ Lecture mesures de    │  │ Calcul d'une densité      │
│ densité               │  │ approchée                 │
└──────────────────────┘  └──────────────────────────┘
                 │
┌──────────────────────────────────────────────┐
│ Introduction de la densité MO et du facteur k  │
└──────────────────────────────────────────────┘
                 │
┌──────────────────────┐
│     Calcul de t%      │
└──────────────────────┘
                 │
┌──────────────────────────────────────────────┐
│  Elimination des points à densité erronée      │
│            (zone cavée)                         │
└──────────────────────────────────────────────┘
                 │
┌──────────────────────────────────────────────┐
│   Calcul de la moyenne glissée sur 2m.         │
└──────────────────────────────────────────────┘
                 │
┌──────────────────────────────────────────────┐
│        Test de fin de boucle fini?             │
└──────────────────────────────────────────────┘
                        oui ──────────────────────┐
                         │                          │
                        non                         │
                         │                          │
┌──────────────────────────────────────────────┐   │
│         Lecture du fichier tp diagr.           │   │
└──────────────────────────────────────────────┘   │
                 │                                  │
┌──────────────────────────────────────────────┐   │
│  Calcul du tp aux profondeurs de prélévement   │   │
└──────────────────────────────────────────────┘   │
                 │                                  │
┌──────────────────────────────────────────────┐   │
│ Calcul des moyennes tp échantillons et tp diagr.│   │
└──────────────────────────────────────────────┘   │
                 │                                  │
┌──────────────────────────────────────────────────────┐ │
│ Test sur les moyennes et conversion des paramétres     │ │
│ correspondants à la valeur |moy. échant.-moy. diagr.|  │ │
│ minimum                                                │ │
└──────────────────────────────────────────────────────┘ │
                 │                                  │
┌──────────────────────────────────────────────┐   │
│ Calcul des variances et du coeff. de correlation│   │
└──────────────────────────────────────────────┘   │
                 │                                  │
┌──────────────────────────────────────────────┐   │
│       Incrémentation de \T MO                  │   │
│       (de 930 à 1600 µs/m)                     │   │
│       \T MO = \T MO + a                        │   │
└──────────────────────────────────────────────┘   │
                 │                                  │
                 └──────────────────────────────────┤
                                                    │
┌──────────────────────────────────────────────────┐
│ Calcul du t% et tp diagr. avec les paramètres retenus │
└──────────────────────────────────────────────────┘
                 │
┌──────────────────────────────────────────────────────┐
│                    Tracé final                         │
│ tp diagr. ou t diagr.(moy. ou non)/profondeur,         │
│ tp diagr./tp échant.                                   │
└──────────────────────────────────────────────────────┘
```

FIG.7

FIG.8